# EUROPEAN PATENT SPECIFICATION

(11) **EP 2 889 496 B1**
(45) Date of publication and mention of the grant of the patent: **01.08.2018**
(21) Application number: 14199542.3
(22) Date of filing: 22.12.2014
(51) Int. Cl.: F16C 3/08, F16C 3/14, F16C 11/02, F16C 9/04

(54) **Structure of crankshaft for internal combustion engine**
Struktur einer Kurbelwelle für eine Brennkraftmaschine
Structure de vilebrequin pour moteur à combustion interne

(30) Priority: 27.12.2013 JP 2013271036
(43) Date of publication of application: 01.07.2015
(73) Proprietor: HONDA MOTOR CO., LTD., Tokyo, 107-8556 (JP)
(72) Inventor: Kamiya, Mitsuyoshi, SAITAMA, 351-0193 (JP); Harada, Motoki, SAITAMA, 351-0193 (JP); Mukouhara, Hodaka, SAITAMA, 351-0193 (JP)
(74) Representative: Brevalex

(56) References cited:
- DD-A1- 42 896
- DE-A1-102004 040 565
- DE-A1-102008 031 993
- DE-C1- 19 902 819
- JP-A- 2001 082 443
- JP-A- 2011 017 399

## Description

### [Technical Field]

The present invention relates to a structure of a crankshaft for an internal combustion engine.

### [Background Art]

As crankshafts for internal combustion engines, there are an integrated crankshaft in which crank journals, crank webs, and a crankpin joined together are shaped as one integrated body by forging, and an assembled crankshaft in which crank webs integrally including crank journals are joined by a separate crankpin therebetween.

Since the integrated crankshaft is shaped by forging, it has superior strength. The crankshaft according to the present invention relates to this integrated crankshaft.

The integrated crankshaft has superior strength, but stress is likely to be locally concentrated at the crankshaft due to force applied by reciprocation of a piston to the crankpin through a connecting rod.

Specifically, in the case where the crankpin and the crank webs are separate bodies, they move relative to each other, and the stress concentration can therefore be avoided. However, in the case where the crankpin and the crank webs are one integrated body, they do no move relative to each other, and the stress is therefore likely to be concentrated.

In particular, during combustion of the internal combustion engine, the expanding pressure pushes the piston, thereby applying large force to the crankpin through the connecting rod. As a result, stress is concentrated extremely at a corner portion which continues from the crankpin to a crank arm.

To solve this, there has been a case where stress is spread by forming recessed portions (thinned portions) in each of the facing surfaces of facing crank webs on a counterweight side of a corner portion which continues from a crankpin to a crank arm (see Patent Document 1).

### [Prior Art Document]

### [Patent Document]

[Patent Document 1] Japanese Patent No. 3657474

### [Summary of the Invention]

### [Problem to be Solved by the Invention]

In the structure of the crankshaft disclosed in Patent Document 1, a thrust receiving surface for restricting axial movement of the big end of a connecting rod is formed in an annular shape on each of the facing surfaces of crank arm parts around the root of the crankpin. Also, the recessed portions (thinned portion) are formed on both sides of a base end portion of each crank arm part at a position shifted away from the thrust receiving surface toward the counterweight, in such a way as to cut the base end portion toward the axis of a crank journal (see Fig. 2 of Patent Document 1).

The recessed portions formed near the thrust receiving surface spread stress concentrated at the corner portion continuing from the crankpin to the crank arm. Accordingly, extreme stress concentration can be avoided.

### [Means for Solving the Problem]

Here, it is desirable to facilitate stress relaxation as much as possible to avoid the stress concentration as much as possible, and further stress relaxation is expected from the structure of the crankshaft in Patent Document 1.

An object of the present invention is to provide a structure of a crankshaft for an internal combustion engine capable of improving the durability of the crankshaft by facilitating stress relaxation to avoid stress concentration as much as possible.

### [Means for Solving the Problems]

To achieve the above-mentioned object, the inventor of the present application has conducted an extensive research to analyze stress generated at a corner portion continuing from a crankpin to a crank arm. As a result, the inventor of the present application has found that the closer a recessed portion provided near the corner portion is to the crankpin, the greater the stress is relaxed, and the stress concentration can be avoided as much as possible.

Based on this analysis result, a first aspect of the present invention provides
a structure of a crankshaft for an internal combustion engine,
the crankshaft being an integrated crankshaft formed integrally such that crank webs each with a crank arm part and a counterweight part formed continuously from the crank arm part form crank journals around a rotation axis (Cx) of the crankshaft in a protruding manner, the crank arm parts of the crank webs facing each other are joined by a crankpin therebetween, and a thrust receiving surface is formed on each of the crank arm parts around a root of the crankpin in an annularly protruding manner to restrict axial movement of a connecting rod,
in which a recessed portion (G) is formed in each of facing surfaces of the facing crank webs at a position near a corner portion (A) continuing from the crankpin to the crank arm part, the position being so close to the crankpin that part of the thrust receiving surface is cut away.

A second aspect of the present invention provides
the structure of a crankshaft for an internal combustion engine according to the first aspect of the present invention,
in which the recessed portion (G) is formed on a largest pressure straight line (P) connecting an axis of a piston pin (Cz) and an axis of the crankpin (Cy) at a crank angle at which at least a largest pressure in a power stroke is applied to the crankpin through the connecting rod.

A third aspect of the present invention provides
the structure of a crankshaft for an internal combustion engine according to the first or second aspect of the present invention,
in which inside the crankshaft, an oil path structure is formed which includes a first oil feeding path (31, 61) formed around an axis of each of the crank journals, a second oil feeding path (32, 62) extending from the first oil feeding path (31, 61) through the corresponding crank arm part to an inside of the crankpin, and a third oil feeding path (33, 63) extending perpendicularly to the second oil feeding path (32, 62) and opening at an outer peripheral surface of the crankpin, and
the second oil feeding path (32, 62) is formed at such a position that the larger a volume of the recessed portion (G), the further the second oil feeding path (32, 62) is away from the recessed portion (G).

A fourth aspect of the present invention provides the structure of a crankshaft for an internal combustion engine according to any one of the first to third aspects of the present invention,
in which at least part of the recessed portion (G) is situated on the crankpin side of the rotation axis (Cx) of the crankshaft.

A fifth aspect of the present invention provides
the structure of a crankshaft for an internal combustion engine according to any one of the second to fourth aspects of the present invention,
in which the recessed portion (G) is formed in such a way as to straightly penetrate the crank web in a direction crossing the largest pressure straight line (P).

A sixth aspect of the present invention provides
the structure of a crankshaft for an internal combustion engine according to any one of the second to fourth aspects of the present invention,
in which the recessed portion (G) is formed as one portion which is long in a direction crossing the largest pressure straight line (P).

A seventh aspect of the present invention provides
the structure of a crankshaft for an internal combustion engine according to any one of the second to fourth aspects of the present invention,
in which the recessed portion (G) is formed as one portion extending in an arc shape across both sides of the largest pressure straight line (P) along an outer periphery of the thrust receiving surface.

An eighth aspect of the present invention provides
the structure of a crankshaft for an internal combustion engine according to any one of the second to fourth aspects of the present invention,
in which the recessed portion (G) is formed as a plurality of portions in an arch shape across both sides of the largest pressure straight line (P) along an outer periphery of the thrust receiving surface.

A ninth aspect of the present invention provides
the structure of a crankshaft for an internal combustion engine according to any one of the first to eighth aspects of the present invention,
in which the internal combustion engine is a V-shaped internal combustion engine with cylinders arranged in a V-shape, and
the connecting rods of the cylinders are coupled to the same crankpin of the crankshaft.

### [Effects of the Invention]

The structure of a crankshaft for an internal combustion engine according to the first aspect of the present invention is the integrated crankshaft in which the thrust receiving surface is formed on each of the crank arm parts around the root of the crankpin in an annularly protruding manner to restrict axial movement of a connecting rod, and the recessed portion (G) is formed in each of the facing surfaces of the facing crank webs at a position near the corner portion (A) continuing from the crankpin to the crank arm part, the position being so close to the crankpin that part of the thrust receiving surface is cut away. In this way, the stress relaxation is facilitated and the stress concentration is therefore avoided as much as possible. Accordingly, the durability of the crankshaft can be further improved.

In the structure of a crankshaft for an internal combustion engine according to the second aspect of the present invention, the recessed portion (G) is formed on the largest pressure straight line (P) connecting the axis of the piston pin (Cz) and the axis of the crankpin (Cy) at the crank angle at which at least the largest pressure in a power stroke is applied to the crankpin through the connecting rod. In this way, in the area of the corner portion (A) continuing from the crankpin to the crank arm part, the recessed portion (G) is formed near a spot in the corner portion (A) where stress is concentrated most. Thus, the stress concentration can be relaxed effectively. Accordingly, the durability of the crankshaft can be improved.

The structure of a crankshaft for an internal combustion engine according to the third aspect of the present invention takes into consideration that the larger the volume of the recessed portion (G), the smaller the volume of the crankshaft on the recessed portion (G) side of the second oil feeing path (32, 62) becomes, and the further the stress neutral plane, at which no tensile force or compressive force is applied, is moved away from the recessed portion (G). Thus, the second oil feeding path (32, 62) extending straightly from the first oil feeding path (31, 61) through the corresponding crank arm part to the inside of the crankpin can be formed at such a position that the larger the volume of the recessed portion (G), the further the second oil feeding path (32, 62) is away from the recessed portion (G), i.e. on the stress neutral plane which receives no tension or compression. Stress is hardly generated at the second oil feeding path (32, 62), and the shape thereof is maintained as much as possible. Accordingly, fracture or the like can be prevented.

In the structure of a crankshaft for an internal combustion engine according to the fourth aspect of the present invention, at least part of the recessed portion (G) is situated on the crankpin side of the rotation axis (Cx) of the crankshaft. In this way, at least part of oil accumulated in the recessed portion (G) moves toward the crankpin and leaks onto the thrust receiving surface from the recessed portion (G) with the centrifugal force of rotation of the crankshaft. Thus, the sliding contact portions of the thrust receiving surface and the big end of the connecting rod can be easily lubricated.

In the structure of a crankshaft for an internal combustion engine according to the fifth aspect of the present invention, the recessed portion (G) is formed in such a way as to straightly penetrate the crank web in the direction crossing the largest pressure straight line (P). In this way, even if the ignition timing is changed and the crank angle at which the largest pressure is applied to the crankpin is varied, thereby displacing the largest pressure straight line (P), some portion of the recessed portion (G) formed in the long straight shape remains on the largest pressure straight line (P). Accordingly, the stress concentration can always be relaxed.

Moreover, since the recessed portion G is formed in such a way as to straightly penetrate the crank web, the recessed portion (G) is easily formed at the time of the forging.

In the structure of a crankshaft for an internal combustion engine according to the sixth aspect of the present invention, the recessed portion (G) is formed as one portion which is long in a direction crossing the largest pressure straight line (P). In this way, the range of area necessary for the corner portion (A) at which stress is concentrated due to pressure applied to the crankpin at the time of combustion of the internal combustion engine, is covered by the recessed portion (G) situated near the corner portion (A) so that the stress can be spread. In addition, the recessed portion (G) is situated on the largest pressure straight line (P), and therefore effectively relaxes the greatest stress concentration occurring at the corner portion (A) at the crank angle at which the largest pressure is applied to the crankpin. Accordingly, the durability of the crankshaft can be improved.

In the structure of a crankshaft for an internal combustion engine according to the seventh aspect of the present invention, the recessed portion (G) is formed as one portion extending in an arc shape across both sides of the largest pressure straight line (P) along an outer periphery of the thrust receiving surface. In this way, the range of area necessary for the corner portion (A) at which stress is concentrated due to pressure applied to the crankpin at the time of combustion of the internal combustion engine, is covered efficiently in the arc shape by the recessed portion (G) situated near the corner portion (A) so that the stress can always be spread. In addition, the recessed portion (G) is situated on the largest pressure straight line (P), and therefore effectively relaxes the greatest stress concentration. Accordingly, the durability of the crankshaft can be improved.

In the structure of a crankshaft for an internal combustion engine according to the eighth aspect of the present invention, the recessed portion (G) is formed as a plurality of portions in an arch shape across both sides of the largest pressure straight line (P) along an outer periphery of the thrust receiving surface. In this way, the wide range of area of the corner portion (A) at which stress is concentrated due to pressure applied to the crankpin at the time of combustion of the internal combustion engine, is efficiently covered by the plurality of recessed portions (G) so that the stress can be spread. In addition, one of the recessed portions (G) is situated on the largest pressure straight line (P), and therefore effectively relaxes the greatest stress concentration. Accordingly, the durability of the crankshaft can be improved.

In the structure of a crankshaft for an internal combustion engine according to the ninth aspect of the present invention, the internal combustion engine is a V-shaped internal combustion engine with cylinders arranged in a V-shape, and the connecting rods of the cylinders are coupled to the same crankpin of the crankshaft. Thus, the cylinders have the same crank angle at which the largest pressure by combustion in the cylinder is applied to the crankpin, and also have the same positional relationship between the largest pressure straight line (P) and the crank web. In this way, the largest pressure straight lines (P) of both cylinders are situated on the same recessed portion (G). Therefore, the stress concentration occurring due to the largest pressure application in any of the cylinders can be relaxed. Accordingly, the durability of the crankshaft can be improved with a fewer components.

### [Brief Description of the Drawings]

[Fig. 1] Fig. 1 is a partial cross-sectional view of an internal combustion engine employing a crankshaft according to a first embodiment of the present invention.
[Fig. 2] Fig. 2 is a cross-sectional view taken along line II-II in Fig. 1.
[Fig. 3] Fig. 3 is a side view of the crankshaft.
[Fig. 4] Fig. 4 is a longitudinal cross-sectional view of the crankshaft (a cross-sectional view taken along line IV-IV line in Fig. 5).
[Fig. 5] Fig. 5 is a transversal cross-sectional view of the crankshaft (a cross-sectional view taken along line III-III line in Fig. 3).
[Fig. 6] Fig. 6 is a transversal cross-sectional view of a crankshaft according to a second embodiment.
[Fig. 7] Fig. 7 is a side view of a crankshaft according to a third embodiment.
[Fig. 8] Fig. 8 is a longitudinal cross-sectional view of the crankshaft (a cross-sectional view taken along line VIII-VIII line in Fig. 9).
[Fig. 9] Fig. 9 is a transversal cross-sectional view of the crankshaft (a cross-sectional view taken along line IX-IX line in Fig. 7).
[Fig. 10] Fig. 10 is a transversal cross-sectional view of a crankshaft according to a fourth embodiment.
[Fig. 11] Fig. 11 is a transversal cross-sectional view of a crankshaft according to a fifth embodiment.
[Fig. 12] Fig. 12 is a transversal cross-sectional view of a crankshaft according to a sixth embodiment.
[Fig. 13] Fig. 13 is a transversal cross-sectional view of a crankshaft according to a seventh embodiment.
[Fig. 14] Fig. 14 is a transversal cross-sectional view of a crankshaft according to an eighth embodiment.

### [Modes for Carrying Out the Invention]

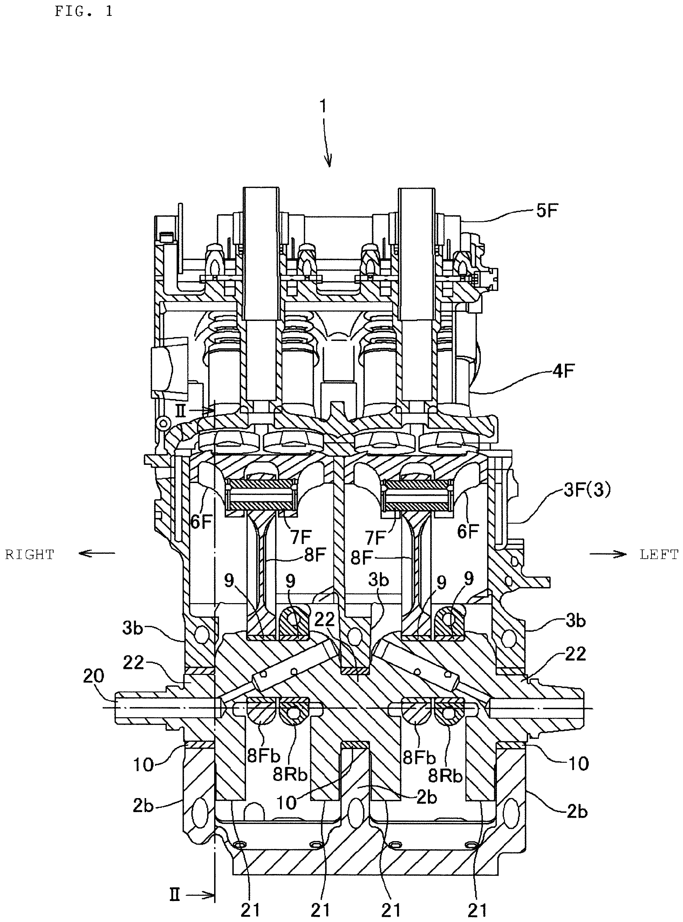

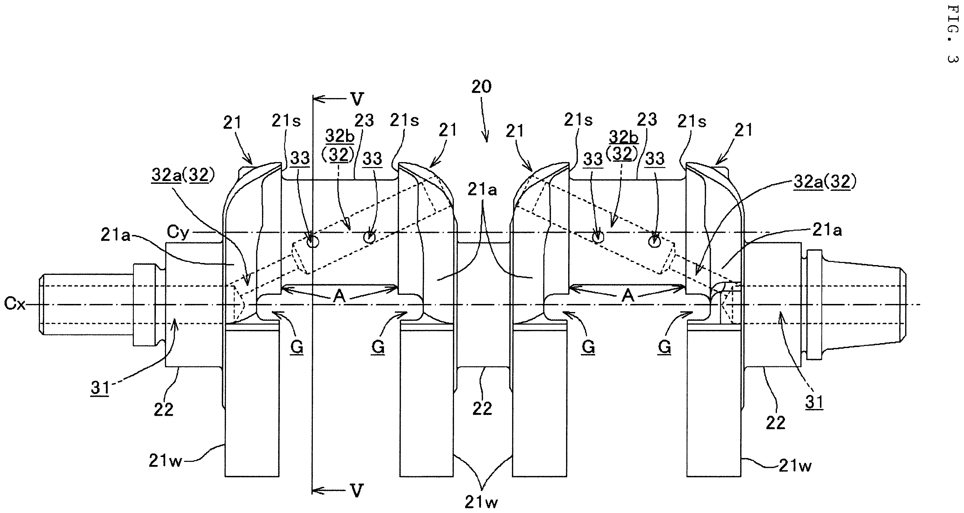

Hereinbelow, a first embodiment of the present invention will be described with reference to Figs. 1 to 5.

An internal combustion engine 1 according to this embodiment is a V-shaped four-cylinder four-stroke internal combustion engine, and Fig. 1 is a partial cross-sectional view of the internal combustion engine 1.

The internal combustion engine 1 is mounted sideways on a motorcycle with a crankshaft 20 oriented in the left-right direction.

Note that in the explanation of the description, directions "front", "rear", "left", and "right" are based on the generally used directions of vehicles, with the direction of straight forward travel of the motorcycle defined as frontward.

In the internal combustion engine 1, the crankshaft 20 is supported by being sandwiched between the joining surfaces of a crankcase 2 on a lower side and a cylinder block 3 above it.

The cylinder block 3 has a front bank cylinder part 3F and a rear bank cylinder part 3R extending obliquely upward toward the front and the rear, respectively, from a portion where the cylinder block 3 and the crankcase 2 together form a crank chamber. Front and rear cylinder heads 4F, 4R are placed over the front and rear bank cylinder parts 3F, 3R, respectively. Further, front and rear cylinder head covers 5F, 5R cover the front and rear cylinder heads 4F, 4R from above, respectively.

The crankshaft 20 is an integrated crankshaft 20 formed integrally such that crank webs 21 each with a crank arm part 21a and a counterweight part 21w formed continuously from the crank arm part 21a form crank journals 22 around the rotation axis (crankshaft axis Cx) in a protruding manner, and the crank arm parts 21a, 21a of each pair of facing crank webs 21, 21 are joined by a crankpin 23 therebetween. The integrated crankshaft 20 is formed by disposing two sets of a crankpin 23 and crank webs 21, 21 on both sides thereof in the left-right direction and integrally joining them with the same crank journal 22.

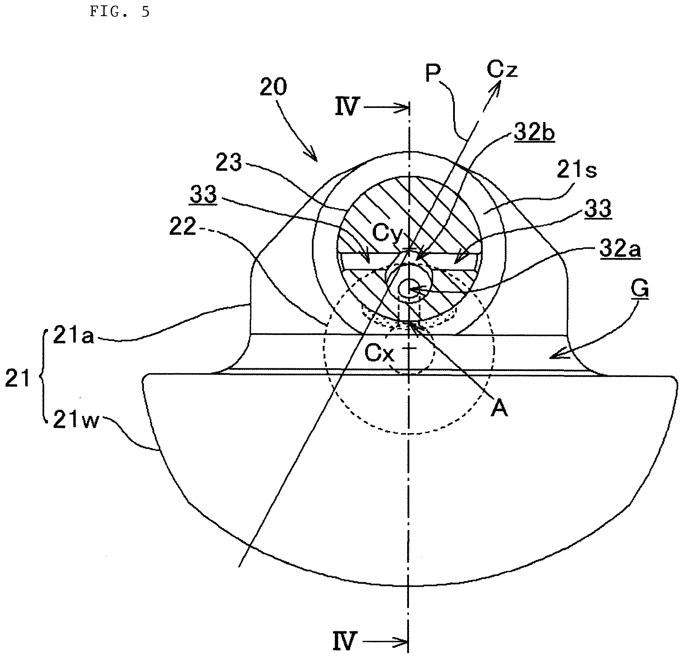

Referring to Fig. 5, each crank web 20 is such that, when viewed from the crankshaft axial direction (side view), the crank arm part 21a extends from the crankpin 23 toward the crankshaft axis Cx while expanding to be wider than the outer diameter of the crankpin 23 and reaches the counterweight part 21w. The counterweight part 21w has a substantially semi-circular plate shape with an outer diameter even greater than the crank arm part 21a.

The three crank journals 22 of the integrated crankshaft 20 arranged in the left-right direction as described above are sandwiched between bearing walls 3b of the cylinder block 3 and bearing walls 2b of the crankcase 2 with bearings 10 interposed therebetween so that the crank journals 22 are supported rotatably.

In the case of this V-shaped four-cylinder internal combustion engine, the crank angle positions of the left and right crankpins 23, 23 are the same.

In other words, the left and right crankpins 23, 23 overlap each other when viewed from the crankshaft axial direction.

Front and rear connecting rods 8F, 8R join the left and right crankpins 23, 23 and front and rear piston pins 7F, 7R of front and rear pistons 6F, 6R which reciprocatingly slide on cylinder bores in the front and rear bank cylinder parts 3F, 3R, to thereby form a crank mechanism.

Big ends 8Fb of the front connecting fronts 8F and big ends 8Rb of the rear connecting rods 8R are disposed side by side in the left-right direction and are each turnably fitted to one of the left and right crankpins 23, 23 with a metal bearing 9 interposed therebetween.

Specifically, a pair of a front connecting rod 8F and a rear connecting rod 8R is joined to the same crankpin 23.

Note that the big ends 8Fb, 8Rb of the connecting rods 8F, 8R each have a split structure in which the big end 8Fb, 8Rb is split into two halves, one on the rod body side and the other on the rod cap side. The big end 8Fb, 8Rb is fitted to the crankpin 23 in a sandwiching manner with the metal bearing 9 interposed therebetween.

The integrated crankshaft 20 is such that a thrust receiving surface 21s is formed on each crank arm part 21a around the root of its crankpin 23 in an annularly protruding manner. The thrust receiving surface 21s restricts axial movement of the big ends 8Fb, 8Rb of the connecting rods 8F, 8R. The outer periphery of the thrust receiving surface 21s formed in an annular shape about a crankpin axis Cy of the crankpin 23 is present at a position near the crankshaft axis Cx (see Fig. 5).

A recessed portion G is formed in each of the facing surfaces of the facing crank webs 21 at a position near a corner portion A continuing from the crankpin 23 to the crank arm part 21a (a portion of the root of the crankpin 23 on the crankshaft axis Cx side, or a portion illustrated as a dotted-line pattern in Fig. 5), the position being so close to the crank pin 23 that part of the thrust receiving surface 21s is cut away.

The recessed portion G is in a straight groove shape penetrating the joint of the crank arm part 21a and the counterweight part 21w in a direction perpendicular to a straight line connecting the crankshaft axis Cx and the crankpin axis Cy.

Inside the integrated crankshaft 20, there are formed oil feeding paths through which to feed lubricating oil to the metal bearings 9, 9 at the joints of the crankpins 23 and the big ends 8Fb, 8Rb of the connecting rods 8F, 8R.

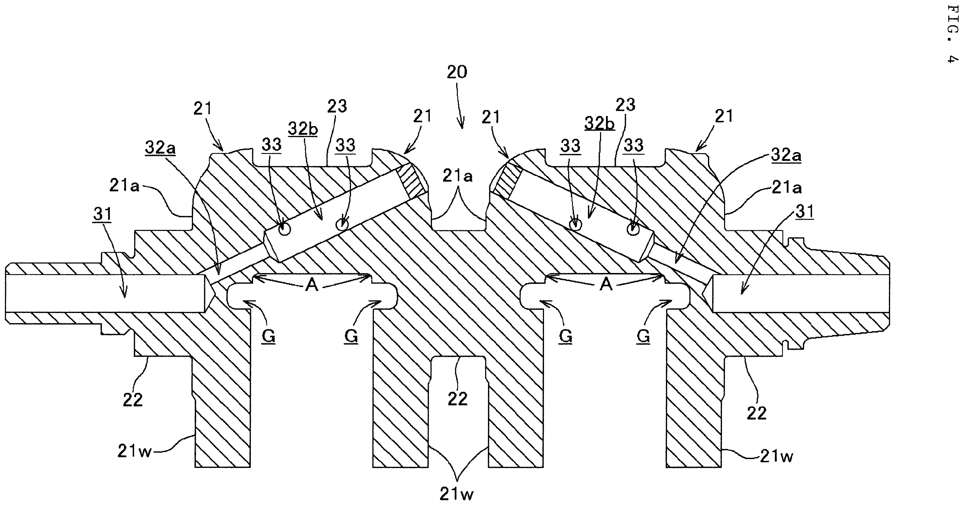

Referring to Fig. 4 which is a longitudinal cross-sectional view of the crankshaft 20, first oil feeding paths 31, 31 through which to receive the lubricating oil from the front and rear sides are formed around the axes of the front and rear crank journals 22, 22, respectively. Second oil feeding paths 32, 32 are formed in such a way as to obliquely extend from the first oil feeding paths 31, 31 through the crank arm parts 21a, 21a to the inside of the crankpins 23, respectively.

The second oil feeding paths 32, 32 form small-diameter second oil feeding paths 32a, 32a with a small inner diameter inside the crank arm parts 21a, 21a, and form large-diameter second oil feeding paths 32b, 32b with a large inner diameter inside the crankpins 23, respectively.

Moreover, third oil feeding paths 33, 33 are bored perpendicularly to the large-diameter second oil feeding paths 32b, 32b inside the crankpins 23. Each oil feeding path 33 has its opposite ends opened at the outer peripheral surface of the corresponding crankpin 23, and serves as a lubricating oil ejecting port to feed the lubricating oil to the inner side of the corresponding metal bearing 9.

This crankshaft 20 is shaped by forging into one integrated body as described above, and forming the oil feeding paths therein by boring.

The corner portion A continuing from the crankpin 23 to the crank arm part 21a is a portion at which stress is concentrated due to pressure applied to the crank pin 23 at the time of combustion of the internal combustion engine. Based on the result of the analysis by the inventor of the present application indicating that the closer the recessed portion G to the corner portion A, the greater the effect of spreading and relaxing the stress generated at the corner portion A, part of the thrust receiving surface 21s is cut away to form the straight groove-shaped recessed portion G at a near position so that it can be closer to the corner portion A.

In a power stroke of the internal combustion engine, the expanding pressure reaches the highest point when the piston slightly passes the top dead center after combustion is started by ignition before the top dead center of the piston. At this moment, the largest pressure is applied to the crankpin 23 through the connecting rod 8F, 8R.

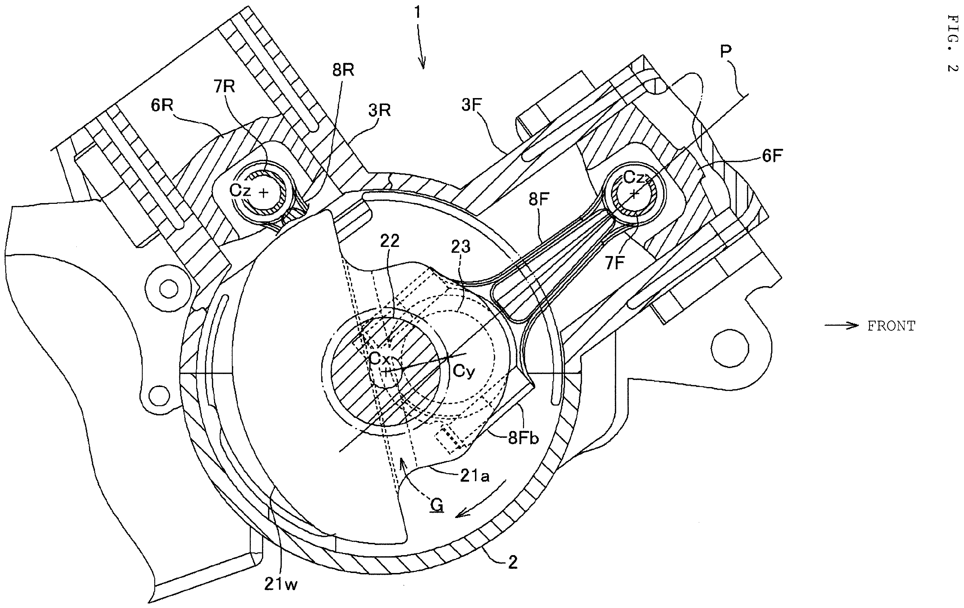

Fig. 2 illustrates a state where the expanding pressure has reached the highest point in a power stroke of the right cylinder in the front bank cylinder part 3F, and the largest pressure is applied to the crankpin 23 through the front connecting rod 8F.

Assuming a largest pressure straight line P as a straight line connecting the axis of the piston pin 7 (piston pin axis Cz) and the axis of the crankpin 23 (crankpin axis Cy) at a crank angle at which the largest pressure is applied to the crankpin 23, the largest pressure straight line P crosses the recessed portion G (see Figs. 2 and 5).

Thus, the recessed portion G is formed as close as possible to the corner portion A so that the stress at the corner portion A can be spread as much as possible. In addition, the recessed portion G is present on the largest pressure straight line P and therefore effectively relaxes the greatest stress concentration occurring at the corner portion A at the crank angle at which the largest pressure is applied to the crankpin 23. Accordingly, the durability of the crankshaft 20 can be improved.

Note that in the case of this V-shaped four-cylinder internal combustion engine, the big ends 8Fb, 8Rb of a pair of a front connecting rod 8F and a rear connecting rod 8R are joined to the same crankpin 23, and the expanding pressures in power strokes in the front and rear bank cylinder parts 3F, 3R push the front and rear pistons 6F, 6R and are applied to the crankpin 23 through the front and rear connecting rods 8F, 8R.

For both applications of the largest expanding pressures in the front and rear bank cylinder parts 8F, 8R, the ignition timings are set such that the positional relationship between the largest pressure straight line P and the crank web 21 can be the same. Thus, the recessed portions G are situated in the same positional relationship with their largest pressure straight lines P, and therefore the stress concentration upon either of the applications of the largest pressures can be relaxed. Accordingly, the durability of the crankshaft 20 can be improved with a fewer components.

Pressure applied to the crankpin 23 at the time of combustion of the internal combustion engine results in stress concentration at the corner portion A continuing from the crankpin 23 to the crank arm part 21a. According to an analysis on the stress distribution in the crank arm part 21a in this state, a stress neutral plane at which no tensile force or compressive force is applied is formed around the corner portion A. The corner portion A side of the stress neutral plane is pulled, whereas the opposite side of the stress neutral plane from the corner portion A is compressed.

The recessed portion G is present on the corner portion A side of the stress neutral plane, and the volume on the corner portion A side of the stress neutral plane is reduced by the recessed portion G. Accordingly, the stress neutral plane is present at a position far from the recessed portion G as compared a normal crankshaft without the recessed portion G.

Of the oil feeding paths 31, 32, 33 bored inside the integrated crankshaft 20, the small-diameter second oil feeding path 32a obliquely bored inside the crank arm part 21a is formed on the stress neutral plane present at the position away from the recessed portion G.

Since the small-diameter second oil feeding path 32a is present on the stress neutral plane at which no tensile force or compressive force is applied, stress is hardly generated at the small-diameter second oil feeding path 32a. Thus, the shape of the small-diameter second oil feeding path 32a is maintained. Accordingly, fracture or the like can be prevented.

The larger the volume of the recessed portion G, the further the stress neutral plane, which receives no tension or compression, is moved away from the recessed portion G, and therefore the further the small-diameter second oil feeding path 32a is formed away from the recessed portion G on the stress neutral plane as well.

Moreover, by making the inner diameter of the small-diameter second oil feeding path 32a a small diameter, the volume around the stress neutral plane is increased, thereby making it possible to improve the rigidity of the crank arm part 21a. Accordingly, deformation due to stress can be reduced.

At least part of the recessed portion G is situated on the crankpin 23 side of the rotation axis of the crankshaft 20 (crankshaft axis Cx). In this way, at least part of oil accumulated in the recessed portion G moves toward the crankpin 23 and leaks onto the thrust receiving surface 21s from the recessed portion G with the centrifugal force of rotation of the crankshaft 20. Thus, the sliding contact portions of the thrust receiving surface 21s and the big end 8Fb, 8Rb of the connecting rod 8L, 8R can be easily lubricated.

The recessed portion G is formed in a long shape straightly penetrating the crank web 21 in a direction crossing the largest pressure straight line P. In this way, even if the ignition timing is changed and the crank angle at which the largest pressure is applied to the crankpin 23 is varied, thereby displacing the largest pressure straight line P, some portion of the recessed portion G formed in the long straight shape remains on the largest pressure straight line P. Accordingly, the stress concentration can always be relaxed.

Moreover, since the recessed portion G is formed in such a way as to straightly penetrate the crank web 21, the recessed portion G is easily formed at the time of the forging.

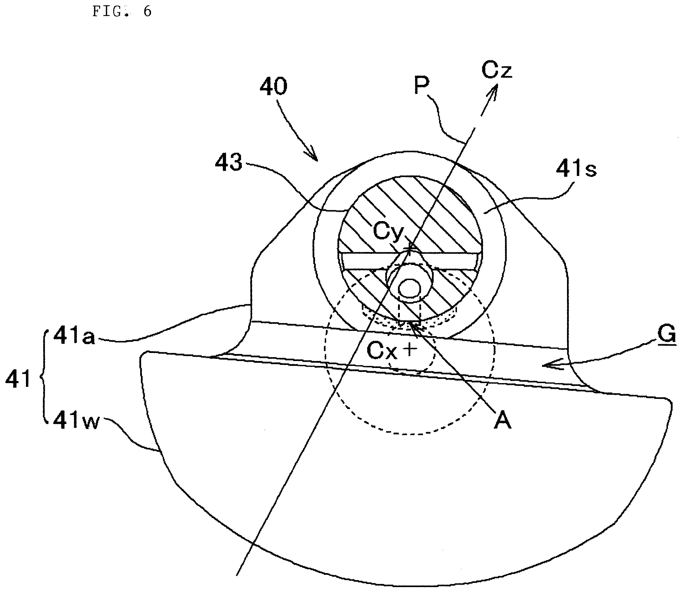

Next, a second embodiment in which the crank webs are modified will be described with reference to Fig. 6.

A crankshaft 40 is the crankshaft 20 according to the above-described first embodiment with modified crank webs.

The crank webs 21 of the crankshaft 20 according to the first embodiment are each formed symmetrically with respect to a plane including the crankshaft axis Cx and the crankpin axis Cy. However, the crankshaft 40 is shaped such that a counterweight part 41w is slightly turned and displaced about the crankshaft axis Cx relative to a crank arm part 41a, and thus there is no symmetry with respect to the plane including the crankshaft axis Cx and the crankpin axis Cy.

Along with the counterweight part 41w, a groove-shaped straightly-penetrating recessed portion G is also turned and displaced.

The recessed portion G is provided at a position near a corner portion A continuing from a crankpin 43 to a crank arm part 41a, the position being so close to the crank pin 43 that part of a thrust receiving surface 41s is cut away.

The counterweight part 41w and the recessed portion G are turned and displaced toward a largest pressure straight line P connecting the axis of a piston pin (piston pin axis Cz) and the crankpin axis Cy at a crank angle at which the largest pressure is applied to the crankpin 43. Thus, the largest pressure straight line P crosses the groove-shaped recessed portion G at an angle closer to a right angle.

The recessed portion G is formed as close as possible to the corner portion A so that the stress at the corner portion A can be spread as much as possible. In addition, the recessed portion G is situated to cross the largest pressure straight line P at an angle closer to a right angle, and therefore effectively relaxes the greatest stress concentration occurring at the corner portion A at the crank angle at which the largest pressure is applied to the crankpin 43. Accordingly, the durability of the crankshaft 40 can be improved.

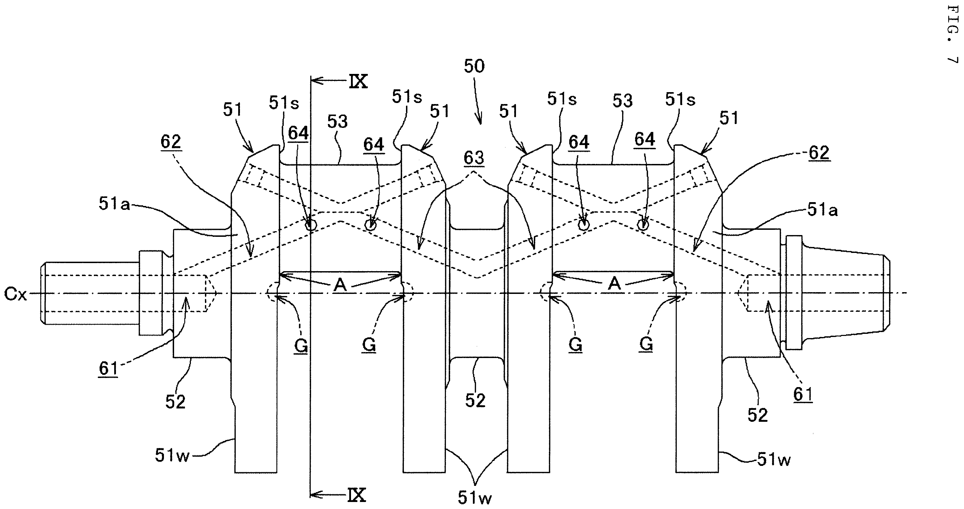

Next, an integrated crankshaft 50 according to a third embodiment will be described with reference to Figs. 7 to 9.

This crankshaft 50 is an example differing from the above-described embodiments in the shape of crank webs 51 and the structure of oil feeding paths.

The crankshaft 50 is used in a V-shaped four-cylinder internal combustion engine, and is an integrated crankshaft 50 formed integrally such that crank arm parts 51a, 51a of each pair of facing crank webs 51, 51 are joined by a crankpin 53 therebetween. The integrated crankshaft 50 is formed by disposing two sets of a crankpin 53 and crank webs 51, 51 on both sides thereof in the left-right direction and integrally joining them with the same crank journal 52.

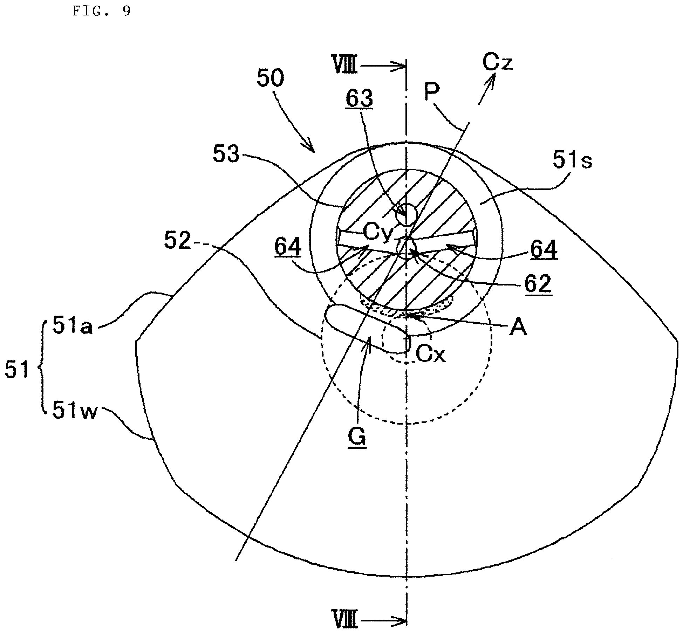

Referring to Fig. 9, each crank web 51 is such that, when viewed from the crankshaft axial direction (side view), the crank arm part 51a extends from the crankpin 53 toward a crankshaft axis Cx while expanding to be wider than the outer diameter of the crankpin 53 and reaches a counterweight part 51w. The counterweight part 51w has a substantially semi-circular plate shape with an outer diameter equal to the greatest width of the expanding crank arm part 51a.

A thrust receiving surface 51s is formed on each crank arm part 51a around the root of its crankpin 53 in an annularly protruding manner. A recessed portion G is formed in an elongated circle shape at a position near a corner portion A continuing from the crankpin 53 to the crank arm part 51a, the position being so close to the crank pin 53 that part of the thrust receiving surface 51s is cut away.

The recessed portion G is situated mostly on one side of a straight line connecting the crankshaft axis Cx and a crankpin axis Cy.

The recessed portion G is formed on a side where a largest pressure straight line P connecting a piston pin axis Cz and the crankpin axis Cy at a crank angle at which the largest pressure is applied to the crankpin 53 passes, and the recessed portion G is present on the largest pressure straight line P.

In this way, the range of area necessary for the corner portion A at which stress is concentrated due to pressure applied to the crankpin 53 at the time of combustion of the internal combustion engine, is efficiently covered by the recessed portion G situated near the corner portion A so that the stress can be spread. In addition, the recessed portion G is present on the largest pressure straight line P, and therefore effectively relaxes the greatest stress concentration occurring at the corner portion A at the crank angle at which the largest pressure is applied to the crankpin 53. Accordingly, the durability of the crankshaft 50 can be improved.

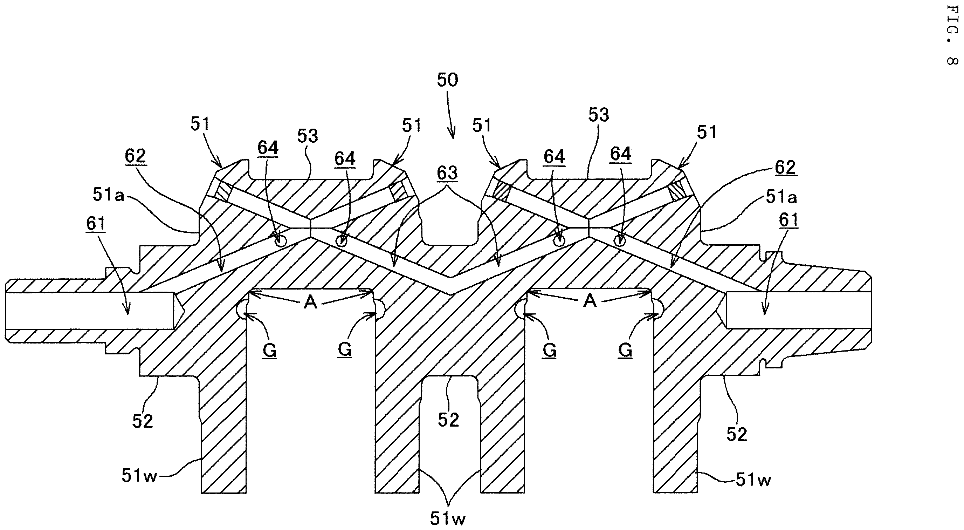

Referring to Fig. 8, oil feeding paths formed inside this integrated crankshaft 50 are such that first oil feeding paths 61, 61 through which to receive lubricating oil from the front and rear sides are formed around the axes of the front and rear crank journals 52, 52, respectively, and second oil feeding paths 62, 62 are bored in such a way as to obliquely extend from the first oil feeding paths 61, 61 through the crank arm parts 51a, 51a to the inside of the crankpins 53, respectively.

Moreover, joining oil feeding paths 62c, 62c are bored in such a way as to cross the second oil feeding paths 62, 62 at the center of the crankpins 53, respectively. The left and right joining oil feeding paths 62c, 62c are joined to each other at the center of the center crank journal 52.

Third oil feeding paths 63, 63 are bored perpendicularly to the second oil feeding paths 62, 62 and the joining oil feeding paths 62c, 62c, respectively. Each oil feeding path 63 has its opposite ends opened at the outer peripheral surface of the corresponding crankpin 53, and serves as a lubricating oil ejecting port to feed the lubricating oil to the joint of the corresponding crankpin and the big end of the corresponding connecting rod.

Of the oil feeding paths bored inside the integrated crankshaft 50, the second oil feeding path 62 obliquely bored inside the crank arm part 51a is formed on a stress neutral plane present at a position away from the recessed portion G.

Since the second oil feeding path 62 is present on the stress neutral plane at which no tensile force or compressive force is applied, stress is hardly generated at the second oil feeding path 62. Thus, the shape of the second oil feeding path 62 is maintained. Accordingly, fracture or the like can be prevented.

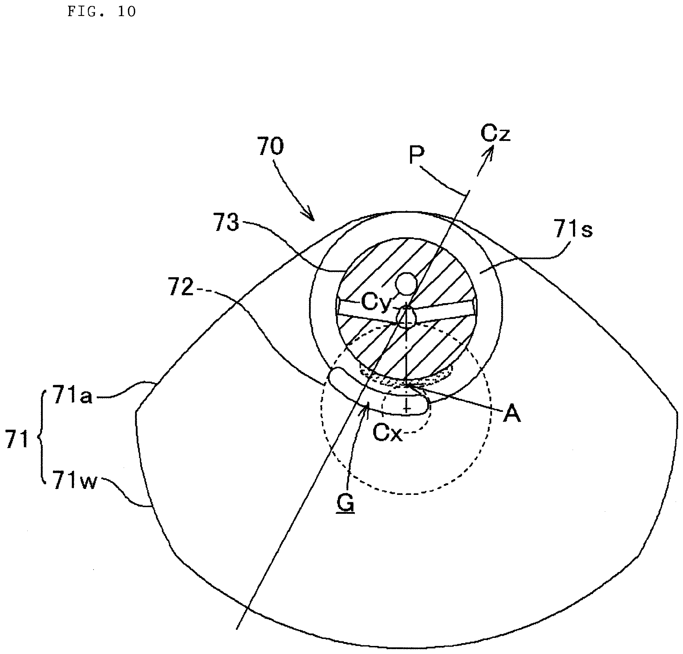

A next crankshaft 70 of a fourth embodiment is a modification in which, as illustrated in Fig. 10, the recessed portion G of the elongated circle shape in the crankshaft 50 of the above-described third embodiment (see Fig. 9) is changed in shape and formed in an arc shape.

There is a corner portion A of an arc shape which continues from a crankpin 73 to a crank arm part 71a and at which stress is concentrated due to pressure applied to the crankpin 73 at the time of combustion of the internal combustion engine. For this reason, the recessed portion G is formed in an arc shape near and along the corner portion A by cutting away part of a thrust receiving surface 71s. In this way, the range of area necessary for the corner portion A is efficiently covered by the recessed portion G of the arc shape situated near the corner portion A so that the stress can be effectively spread. In addition, the recessed portion G is present on a largest pressure straight line P, and therefore relaxes the greatest stress concentration occurring at the corner portion A. Accordingly, the durability of the crankshaft 70 can be improved.

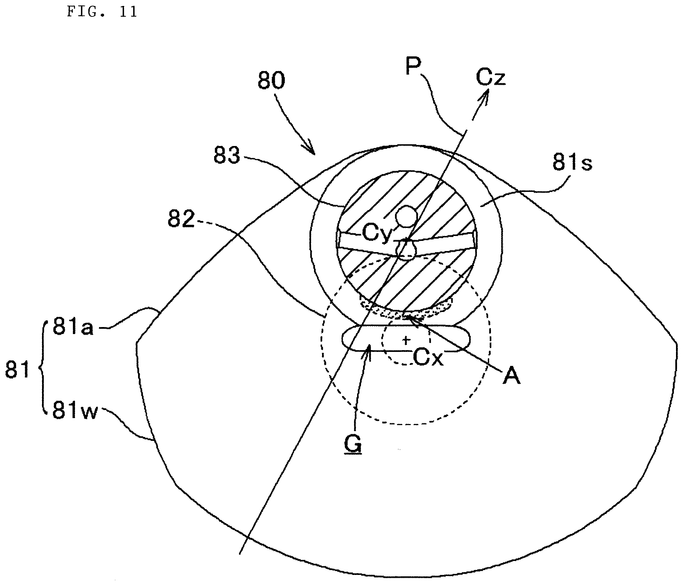

A next crankshaft 80 of a fifth embodiment is such that, as illustrated in Fig. 11, the recessed portion G of the elongated circle shape in the crankshaft 50 of the above-described third embodiment (see Fig. 9) is changed in position and moved onto a straight line connecting the crankshaft axis Cx and the crankpin axis Cy, and the shape of the crankshaft 80 is symmetrical with respect to this straight line.

Here, the recessed portion G is situated on the largest pressure straight line P.

Thus, in the case of the crankshaft 80 of the fifth embodiment, too, the recessed portion G is formed as close as possible to a corner portion A so that stress at the corner portion A can be spread as much as possible. In addition, the recessed portion G is present on the largest pressure straight line P and therefore effectively relaxes the greatest stress concentration occurring at the corner portion A at a crank angle at which the largest pressure is applied to a crankpin 83. Accordingly, the durability of the crankshaft 80 can be improved.

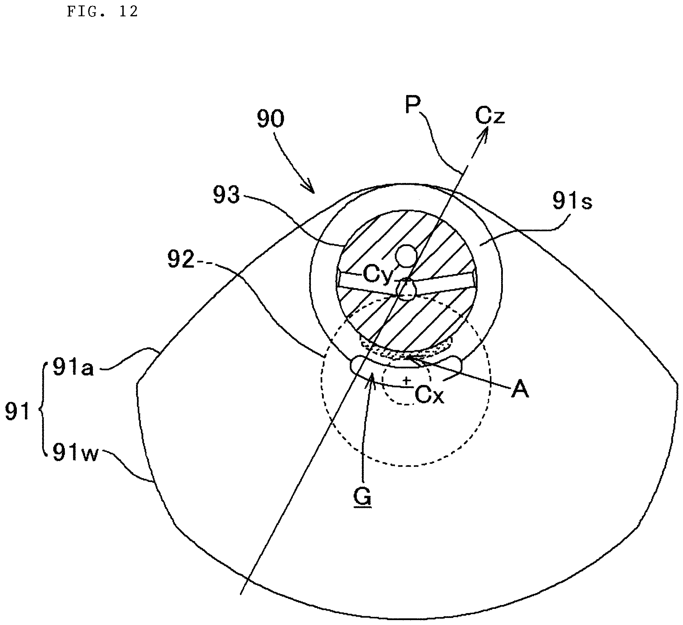

A next crankshaft 90 of a sixth embodiment is a modification in which, as illustrated in Fig. 12, the recessed portion G of the elongated circle shape in the crankshaft 80 of the above-described fifth embodiment (see Fig. 11) is changed in shape and formed in an arc shape.

The range of area necessary for a corner portion A at which stress is concentrated due to pressure applied to a crankpin 93 at the time of combustion of the internal combustion engine, is covered efficiently in the arc shape by the recessed portion G situated near the corner portion A so that the stress can always be spread. In addition, the recessed portion G is present on a largest pressure straight line P, and therefore effectively relaxes the greatest stress concentration. Accordingly, the durability of the crankshaft 90 can be improved.

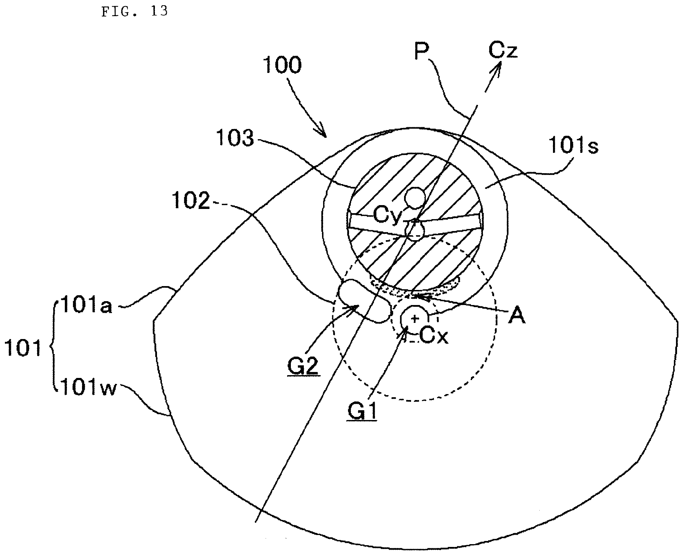

A next crankshaft 100 of a seventh embodiment is a modification of the recessed portion G of the arc shape in the crankshaft 50 of the above-described third embodiment (see Fig. 11), and the recessed portion G is divided into two parts as illustrated in Fig. 13.

A recessed portion G1 of a circular shape is formed on a straight line connecting a crankshaft axis Cx and a crankpin axis Cy, and a recessed portion G2 of an arc shape is formed on one side of the straight line. The recessed portion G2 of the arc shape is situated on a side where a largest pressure straight line P passes, and is present on the largest pressure straight line P.

The wide range of area of a corner portion A at which stress is concentrated due to pressure applied to a crankpin 103 at the time of combustion of the internal combustion engine, can be efficiently covered and handled by the divided recessed portion G1 and recessed portion G2 so that the stress can be spread. In addition, the recessed portion G2 is present on the largest pressure straight line P, and therefore effectively relaxes the greatest stress concentration. Accordingly, the durability of the crankshaft 100 can be improved.

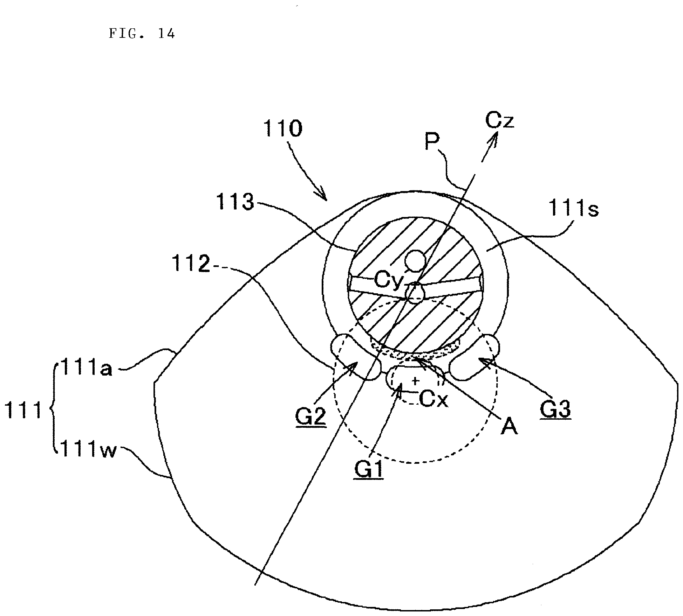

A next crankshaft 110 of an eight embodiment is a modification of the recessed portion G of the arc shape in the crankshaft 50 of the above-described third embodiment (see Fig. 11), and the recessed portion G is divided into three parts as illustrated in Fig. 14.

A recessed portion G1 of an arc shape is formed on a straight line connecting a crankshaft axis Cx and a crankpin axis Cy, and recessed portions G2, G3 of an arc shape are formed on both sides of the straight line.

The recessed portion G2 situated on one side is present on a largest pressure straight line P.

The wide range of area of a corner portion A at which stress is concentrated due to pressure applied to a crankpin 113 at the time of combustion of the internal combustion engine, can be sufficiently covered and handled by the divided recessed portion G1, recessed portion G2, and recessed portion G3 so that the stress can be spread. In addition, the recessed portion G2 is present on the largest pressure straight line P, and therefore effectively relaxes the greatest stress concentration. Accordingly, the durability of the crankshaft 110 can be improved.

The above embodiments have been described by taking examples in each of which the present invention is applied to a crankshaft for use in a V-shaped four-cylinder internal combustion engine. However, the present invention is applicable not only to crankshafts for use in V-shaped four-cylinder internal combustion engines but also to crankshafts for use in internal combustion engines such as single-cylinder internal combustion engines or inline multi-cylinder internal combustion engines.

### [Explanation of the Reference Numerals]

- 1: INTERNAL COMBUSTION ENGINE
- Cx: CRANKSHAFT AXIS
- Cy: CRANKPIN AXIS
- Cz: PISTON PIN AXIS
- 20: CRANKSHAFT
- 21: CRANK WEB
- 21a: CRANK ARM PART
- 21w: COUNTERWEIGHT PART
- 21s: THRUST RECEIVING SURFACE
- 22: CRANK JOURNAL
- 23: CRANKPIN
- 31: FIRST OIL FEEDING PATH
- 32: SECOND OIL FEEDING PATH
- 32a: SMALL-DIAMETER SECOND OIL FEEDING PATH
- 32b: LARGE-DIAMETER SECOND OIL FEEDING PATH
- 33: THIRD OIL FEEDING PATH
- 40: CRANKSHAFT
- 41: CRANK WEB
- 41a: CRANK ARM PART
- 41w: COUNTERWEIGHT PART
- 41s: THRUST RECEIVING SURFACE
- 43: CRANKPIN
- 50: CRANKSHAFT
- 51: CRANK WEB
- 51a: CRANK ARM PART
- 51w: COUNTERWEIGHT PART
- 51s: THRUST RECEIVING SURFACE
- 52: CRANK JOURNAL
- 53: CRANKPIN
- 61: FIRST OIL FEEDING PATH
- 62: SECOND OIL FEEDING PATH
- 63: JOINING OIL FEEDING PATH
- 64: THIRD OIL FEEDING PATH
- 70: CRANKSHAFT
- 71: CRANK WEB
- 71a: CRANK ARM PART
- 71w: COUNTERWEIGHT PART
- 71s: THRUST RECEIVING SURFACE
- 72: CRANK JOURNAL
- 73: CRANKPIN
- 80: CRANKSHAFT
- 81: CRANK WEB
- 81a: CRANK ARM PART
- 81w: COUNTERWEIGHT PART
- 81s: THRUST RECEIVING SURFACE
- 82: CRANK JOURNAL
- 83: CRANKPIN
- 90: CRANKSHAFT
- 91: CRANK WEB
- 91a: CRANK ARM PART
- 91w: COUNTERWEIGHT PART
- 91s: THRUST RECEIVING SURFACE
- 92: CRANK JOURNAL
- 93: CRANKPIN
- 100: CRANKSHAFT
- 101: CRANK WEB
- 101a: CRANK ARM PART
- 101w: COUNTERWEIGHT PART
- 101s: THRUST RECEIVING SURFACE
- 102: CRANK JOURNAL
- 103: CRANKPIN
- 110: CRANKSHAFT
- 111: CRANK WEB
- 111a: CRANK ARM PART
- 111w: COUNTERWEIGHT PART
- 111s: THRUST RECEIVING SURFACE
- 112: CRANK JOURNAL
- 113: CRANKPIN

## Claims

1. A structure of a crankshaft (20, 50) for an internal combustion engine, the crankshaft being an integrated crankshaft formed integrally such that crank webs (21,51) each with a crank arm part (21a, 51a) and a counterweight part (21w, 51w) formed continuously from the crank arm part form crank journals (22, 52) around a rotation axis (Cx) of the crankshaft in a protruding manner, the crank arm parts of the crank webs facing each other are joined by a crankpin (23, 53) therebetween, and a thrust receiving surface (21s, 51s) is formed on each of the crank arm parts around a root of the crankpin in an annularly protruding manner to restrict axial movement of a connecting rod,
wherein a recessed portion (G) is formed in each of facing surfaces of the facing crank webs at a position near a corner portion (A) continuing from the crankpin to the crank arm part, the position being so close to the crankpin that part of the thrust receiving surface is cut away.

2. The structure of a crankshaft for an internal combustion engine according to claim 1, wherein the recessed portion (G) is formed on a largest pressure straight line (P) connecting an axis of a piston pin (Cz) and an axis of the crankpin (Cy) at a crank angle at which at least a largest pressure in a power stroke is applied to the crankpin (23, 53) through the connecting rod.

3. The structure of a crankshaft for an internal combustion engine according to claim 1 or 2,
wherein inside the crankshaft, an oil path structure is formed which includes a first oil feeding path (31, 61) formed around an axis of each of the crank journals, a second oil feeding path (32, 62) extending from the first oil feeding path (31, 61) through the corresponding crank arm part to an inside of the crankpin, and a third oil feeding path (33, 63) extending perpendicularly to the second oil feeding path (32, 62) and opening at an outer peripheral surface of the crankpin, and
the second oil feeding path (32, 62) is formed at such a position that the larger a volume of the recessed portion (G), the further the second oil feeding path (32, 62) is away from the recessed portion (G).

4. The structure of a crankshaft for an internal combustion engine according to any one of claims 1 to 3, wherein at least part of the recessed portion (G) is situated on the crankpin side of the rotation axis (Cx) of the crankshaft.

5. The structure of a crankshaft for an internal combustion engine according to any one of claims 2 to 4, wherein the recessed portion (G) is formed in such a way as to straightly penetrate the crank web in a direction crossing the largest pressure straight line (P).

6. The structure of a crankshaft for an internal combustion engine according to any one of claims 2 to 4, wherein the recessed portion (G) is formed as one portion which is long in a direction crossing the largest pressure straight line (P).

7. The structure of a crankshaft for an internal combustion engine according to any one of claims 2 to 4, wherein the recessed portion (G) is formed as one portion extending in an arc shape across both sides of the largest pressure straight line (P) along an outer periphery of the thrust receiving surface.

8. The structure of a crankshaft for an internal combustion engine according to any one of claims 2 to 4, wherein the recessed portion (G) is formed as a plurality of portions in an arch shape across both sides of the largest pressure straight line (P) along an outer periphery of the thrust receiving surface.

9. The structure of a crankshaft for an internal combustion engine according to any one of claims 1 to 8,
wherein the internal combustion engine is a V-shaped internal combustion engine with cylinders arranged in a V-shape, and
the connecting rods of the cylinders are coupled to the same crankpin of the crankshaft.

## Patentansprüche

1. Struktur einer Kurbelwelle (20, 50) für einen Verbrennungsmotor, wobei die Kurbelwelle eine derart integral ausgebildete integrierte Kurbelwelle ist, dass Kurbelwangen (21, 51) jeweils mit einem Kurbelarmteil (21a, 51a) und einem kontinuierlich von dem Kurbelarmteil ausgebildeten Gegengewichtteil (21w, 51w) Kurbelzapfen (22, 52) um eine Drehachse (Cx) der Kurbelwelle in einer vorstehenden Weise ausbilden, die Kurbelarmteile der einander zugewandten Kurbelwangen mittels eines Kurbelbolzens (23, 53) dazwischen verbunden sind, und eine druckaufnehmende Fläche (21s, 51s) an jedem der Kurbelarmteile um einen Ursprung/Fuß des Kurbelbolzens herum in einer ringförmig vorstehenden Weise ausgebildet ist, um eine axiale Bewegung eines Verbindungsstabs zu begrenzen,
wobei ein vertiefter Abschnitt (G) in jeder von einander zugewandten Flächen der einander zugewandten Kurbelwangen an einer Position nahe eines Eckabschnitts (A) ausgebildet ist, welcher von dem Kurbelbolzen zu dem Kurbelarmteil verläuft, wobei die Position so nahe an dem Kurbelbolzen ist, dass ein Teil der druckaufnehmenden Fläche abgeschnitten ist.

2. Struktur einer Kurbelwelle für einen Verbrennungsmotor nach Anspruch 1, wobei der vertiefte Abschnitt (G) an einer geraden Linie (P) mit größtem Druck ausgebildet ist, welche eine Achse eines Kolbenbolzens (Cz) und eine Achse des Kurbelbolzens (Cy) mit einem Kurbelwinkel verbindet, bei welchem wenigstens ein größter Druck in einem Arbeitshub durch den Verbindungsstab auf den Kurbelbolzen (23, 53) appliziert wird.

3. Struktur einer Kurbelwelle für einen Verbrennungsmotor nach Anspruch 1 oder 2,
wobei im Inneren der Kurbelwelle eine Ölpfadstruktur ausgebildet ist, welche einen ersten Ölzuführungspfad (31, 61), welcher um eine Achse jedes der Kurbelzapfen ausgebildet ist, einen zweiten Ölzuführungspfad (32, 62), welcher sich von dem ersten Ölzuführungspfad (31, 61) durch den entsprechenden Kurbelarmteil zu einem Inneren des Kurbelbolzens erstreckt, und einen dritten Ölzuführungspfad (33, 63) umfasst, welcher sich senkrecht zu dem zweiten Ölzuführungspfad (32, 62) erstreckt und an einer äußeren Umfangsfläche des Kurbelbolzens mündet, und
der zweite Ölzuführungspfad (32, 62) an solch einer Position ausgebildet ist, dass je größer ein Volumen des vertieften Abschnitts (G) ist, desto weiter der zweite Ölzuführungspfad (32, 62) von dem vertieften Abschnitt (G) entfernt ist.

4. Struktur einer Kurbelwelle für einen Verbrennungsmotor nach einem der Ansprüche 1 bis 3, wobei sich wenigstens ein Teil des vertieften Abschnitts (G) an der Kurbelbolzenseite der Drehachse (Cx) der Kurbelwelle befindet.

5. Struktur einer Kurbelwelle für einen Verbrennungsmotor nach einem der Ansprüche 2 bis 4, wobei der vertiefte Abschnitt (G) in solch einer Weise ausgebildet ist, dass er die Kurbelwange in einer die gerade Linie (P) mit größtem Druck kreuzenden Richtung gerade durchsetzt.

6. Struktur einer Kurbelwelle für einen Verbrennungsmotor nach einem der Ansprüche 2 bis 4, wobei der vertiefte Abschnitt (G) als ein Abschnitt ausgebildet ist, welcher in einer die gerade Linie (P) mit größtem Druck kreuzenden Richtung lang ist.

7. Struktur einer Kurbelwelle für einen Verbrennungsmotor nach einem der Ansprüche 2 bis 4, wobei der vertiefte Abschnitt (G) als ein Abschnitt ausgebildet ist, welcher sich in einer bogenförmigen Gestalt über beide Seiten der geraden Linie (P) mit größtem Druck entlang eines äußeren Umfangs der druckaufnehmenden Fläche erstreckt.

8. Struktur einer Kurbelwelle für einen Verbrennungsmotor nach einem der Ansprüche 2 bis 4, wobei der vertiefte Abschnitt (G) als eine Mehrzahl von Abschnitten in einer bogenförmigen Gestalt über beide Seiten der geraden Linie (P) mit größtem Druck entlang eines äußeren Umfangs der druckaufnehmenden Fläche ausgebildet ist.

9. Struktur einer Kurbelwelle für einen Verbrennungsmotor nach einem der Ansprüche 1 bis 8,
wobei der Verbrennungsmotor ein V-förmiger Verbrennungsmotor mit in einer V-Form angeordneten Zylindern ist, und
die Verbindungsstäbe der Zylinder mit dem gleichen Kurbelbolzen der Kurbelwelle gekoppelt sind.

## Revendications

1. Structure d'un vilebrequin (20, 50) pour un moteur à combustion interne, le vilebrequin étant un vilebrequin intégré, formé de manière solidaire de sorte que les bras de vilebrequin (21, 51), chacun avec une partie de bras de vilebrequin (21a, 51a) et une partie de contrepoids (21w, 51w) formée de manière continue à partir de la partie de bras de vilebrequin forment des tourillons de vilebrequin (22, 52) autour d'un axe de rotation (Cx) du vilebrequin, d'une manière en saillie, les parties de bras de vilebrequin des bras de vilebrequin se faisant face sont assemblées par un maneton (23, 53) entre eux, et une surface de réception de poussée (21s, 51s) est formée sur chacune des parties de bras de vilebrequin autour d'un emplanture du maneton d'une manière annulairement en saillie pour limiter le mouvement axial d'une tige de raccordement,
dans laquelle une partie évidée (G) est formée dans chacune des surfaces en vis-à-vis des bras de vilebrequin en vis-à-vis dans une position à proximité d'une partie de coin (A) continuant du maneton jusqu'à la partie de bras de vilebrequin, la position étant si proche du maneton que la partie de la surface de réception de poussée est découpée.

2. Structure d'un vilebrequin pour un moteur à combustion interne selon la revendication 1, dans laquelle la partie évidée (G) est formée sur la plus grande ligne droite de pression (P) raccordant un axe d'une broche de piston (Cz) et un axe du maneton (Cy) à un angle de vilebrequin auquel au moins la plus grande pression dans une course de combustion est appliquée au maneton (23, 53) par le biais de la tige de raccordement.

3. Structure d'un vilebrequin pour un moteur à combustion interne selon la revendication 1 ou 2,
dans laquelle, a l'intérieur du vilebrequin, on forme une structure de trajectoire d'huile qui comprend une première trajectoire d'alimentation en huile (31, 61) formée autour d'un axe de chacun des tourillons de vilebrequin, une deuxième trajectoire d'alimentation en huile (32, 62) s'étendant à partir de la première trajectoire d'alimentation en huile (31, 61) par la partie de bras de vilebrequin correspondante jusqu'à un intérieur du maneton, et une troisième trajectoire d'alimentation en huile (33, 63) s'étendant perpendiculairement à la deuxième trajectoire d'alimentation en huile (32, 62) et s'ouvrant au niveau d'une surface périphérique externe du maneton, et
la deuxième trajectoire d'alimentation en huile (32, 62) est formée dans une position telle que plus le volume de la partie évidée (G) est grand, plus la deuxième trajectoire d'alimentation en huile (32, 62) est éloignée de la partie évidée (G).

4. Structure d'un vilebrequin pour un moteur à combustion interne selon l'une quelconque des revendications 1 à 3, dans laquelle au moins une partie de la partie évidée (G) est située sur le côté du maneton de l'axe de rotation (Cx) du vilebrequin.

5. Structure d'un vilebrequin pour un moteur à combustion interne selon l'une quelconque des revendications 2 à 4, dans laquelle la partie évidée (G) est formée afin de pénétrer tout droit dans le bras de vilebrequin dans une direction traversant la plus grande ligne droite de pression (P).

6. Structure d'un vilebrequin pour un moteur à combustion interne selon l'une quelconque des revendications 2 à 4, dans laquelle la partie évidée (G) est formée comme une partie qui est longue dans une direction traversant la plus grande ligne droite de pression (P).

7. Structure d'un vilebrequin pour un moteur à combustion interne selon l'une quelconque des revendications 2 à 4, dans laquelle la partie évidée (G) est formée comme une partie s'étendant selon une forme d'arc d'un côté à l'autre des deux côtés de la plus grande ligne droite de pression (P) le long d'une périphérie externe de la surface de réception de poussée.

8. Structure d'un vilebrequin pour un moteur à combustion interne selon l'une quelconque des revendications 2 à 4, dans laquelle la partie évidée (G) est formée comme une pluralité de parties d'une forme d'arc d'un côté à l'autre des deux côtés de la plus grande ligne droite de pression (P) le long d'une périphérie externe de la surface de réception de poussée.

9. Structure d'un vilebrequin pour un moteur à combustion interne selon l'une quelconque des revendications 1 à 8,
dans laquelle le moteur à combustion interne est un moteur à combustion interne en V avec des cylindres agencés en V, et
les tiges de raccordement des cylindres sont couplées au même maneton du vilebrequin.
